# EUROPEAN PATENT APPLICATION

(11) **EP 3 779 149 A1**
(43) Date of publication of application: **17.02.2021**
(21) Application number: 19776206.5
(22) Date of filing: 18.03.2019
(51) Int. Cl.: F02C 7/22, F02C 9/40, F23K 5/00, F23R 3/28

(54) **FUEL SUPPLY DEVICE AND GAS TURBINE**

(30) Priority: 28.03.2018 JP 2018062165
(71) Applicant: IHI CORPORATION, Koto-ku, Tokyo 135-8710 (JP)
(72) Inventor: ONISHI, Shogo, Tokyo 135-8710 (JP); ITO, Shintaro, Tokyo 135-8710 (JP); UCHIDA, Masahiro, Tokyo 135-8710 (JP); MIZUTANI, Taku, Tokyo 135-8710 (JP); FUJIMORI, Toshiro, Tokyo 135-8710 (JP)
(74) Representative: TBK
(86) International application number: PCT/JP2019/011130
(87) International publication number: WO 2019/188484

(57) **Abstract**

A fuel supply device includes a first supply pipe (2f), a first on-off valve (V1), a second on-off valve (VI, V2), a second supply pipe (2d), a connection pipe (2h), a third on-off valve (V3), and a leak check measuring device, and performs a leak check of the first supply pipe (2f).

## Description

### [Technical Field]

The present disclosure relates to a fuel supply device and a gas turbine. Priority is claimed on Japanese Patent Application No. 2018-062165 filed on March 28, 2018, the content of which is incorporated herein by reference.

### [Background Art]

Patent Document 1 listed below discloses a combustion device and a gas turbine which burns ammonia as a fuel. That is, in the combustion device and the gas turbine, a natural gas is premixed with ammonia (ammonia for fuel), the mixture is supplied to a combustor, and a combustion exhaust gas for driving a turbine is obtained. In addition, in order to reduce the nitrogen oxides (NOx), a reduction region for reducing the nitrogen oxides (NOx) generated in a combustion region using ammonia is formed on a downstream side in the combustor.

### [Citation List]

### [Patent Document]

[Patent Document 1] Japanese Unexamined Patent Application, First Publication No. 2016-191507 [Summary of Invention]

### [Technical Problem]

In a supply pipe for supplying a gaseous fuel such as ammonia to a combustor, a temperature, a pressure, or the like in the supply pipe may be measured to perform a leak check. In this case, the supply pipe of the gaseous fuel needs to be heated and held during the leak check. However, since a temperature distribution occurs in the supply pipe during the heating, liquefaction of the gaseous fuel occurs due to a pressure change or a local temperature decrease in the supply pipe, and a decrease in pressure occurs. Such liquefaction of the gaseous fuel inside the supply pipe and a pressure change due to a temperature change can be a bad effect in the leak check. In the related art, in order to solve the above-described problem, the temperature of the supply pipe is adjusted by a heater or the like. However, in the method, it takes time to adjust the temperature of the supply pipe, and a procedure is complicated.

The present disclosure is made in consideration of the above-described circumstances, and an object thereof is to suppress a pressure change during the leak check and to simplify the leak check.

### [Solution to Problem]

In order to achieve the object, in the present disclosure, as a first aspect of a fuel supply device, there is provided a fuel supply device including: a first supply pipe through which a first gaseous fuel is supplied to a combustor; a first on-off valve which is provided in the first supply pipe; a second on-off valve which provided in a portion of the first supply pipe closer to an outlet of the first supply pipe than the first on-off valve; a second supply pipe through which a second gaseous fuel having a liquefaction temperature lower than that of the first gaseous fuel is supplied to the combustor; a connection pipe which connects a portion of the first supply pipe between the first on-off valve and the second on-off valve to the second supply pipe; a third on-off valve which is provided in the connection pipe; and a leak check measuring device which is provided in the first supply pipe, in which the second gaseous fuel is introduced into the first supply pipe to perform a leak check of the first supply pipe.

In the present disclosure, as a second aspect of the fuel supply device, in the first aspect, the fuel supply device further includes a control device, the control device controls the first on-off valve to be in a closed state and controls the second on-off valve and the third on-off valve to be in an open state, and thus replaces the first gaseous fuel remaining in the first supply pipe with the second gaseous fuel, after the replacement, the control device controls the first on-off valve and the second on-off valve to be in a closed state and controls the third on-off valve to be in an open state, and thus pressurizes an inside of the first supply pipe by the second gaseous fuel, and after the pressurization, the control device controls the first to third on-off valves to be in a closed state, and thus, performs the leak check of the first supply pipe using the leak check measuring device.

In the present disclosure, as a third aspect of the fuel supply device, in the second aspect, the control device controls the first on-off valve and the third on-off valve to be in the closed state and controls the second on-off valve to be in an open state before the replacement, and thus a pressure in the first supply pipe is reduced.

In the present disclosure, as a fourth aspect of the fuel supply device, in the second or third aspect, the fuel supply device further includes a degassing pipe of which one end is connected to a downstream side of the second on-off valve in the first supply pipe, in which the degassing pipe discharges the first gaseous fuel from the first supply pipe to an outside during the replacement or the pressure reduction.

In the present disclosure, as a fifth aspect of the fuel supply device, in any one of the first to fourth aspects, the second gaseous fuel is introduced from the second supply pipe to the first supply pipe when mixed combustion of the first gaseous fuel and the second gaseous fuel in the combustor ends.

Moreover, in the present disclosure, as a sixth aspect of the fuel supply device, the first gaseous fuel is ammonia, and the second gaseous fuel is a natural gas.

In addition, in the present disclosure, as first aspect of a gas turbine, there is provided a gas turbine including: the fuel supply device according to any one of the first to sixth aspects.

### [Advantageous Effects of Invention]

According to the present disclosure, by introducing the second gaseous fuel into the first supply pipe, it is possible to suppress the pressure change during the leak check and to simplify the leak check.

### [Brief Description of Drawings]

FIG. 1 is a block diagram showing an overall configuration of a gas turbine according to an embodiment of the present disclosure.
FIG. 2 is a cross-sectional view showing a configuration of a combustor according to an embodiment of the present disclosure.
FIG. 3A is a diagram showing a fuel supply device according to an embodiment of the present disclosure and is a schematic diagram showing a configuration thereof.
FIG. 3B is a diagram showing a fuel supply device according to an embodiment of the present disclosure and is a table showing an operation procedure.

### [Description of Embodiments]

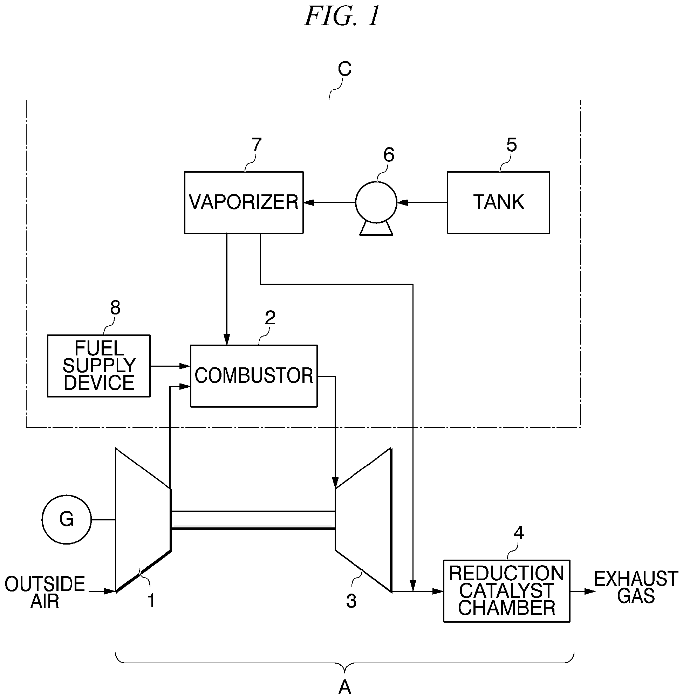

Hereinafter, an embodiment of the present disclosure will be described with reference to the drawings. As shown in FIG. 1, a gas turbine A according to the present embodiment includes a compressor 1, a combustor 2, a turbine 3, a reduction catalyst chamber 4, a tank 5, a pump 6, a vaporizer 7, a fuel supply device 8, and a control device (not shown). The control device includes a Central Processing Device (CPU), a memory such as a Random Access Memory (RAM) or a Read Only Memory (ROM), a storage device such as a Solid State Drive (SSD) or a Hard Disc Drive (HDD), or the like. Further, among these components, the combustor 2, the tank 5, the pump 6, the vaporizer 7, and the fuel supply device 8 constitute a combustion device C in the present embodiment. The gas turbine A is a driving source of a generator G and burns a predetermined fuel to generate rotary power.

The compressor 1 compresses air taken from outside air to a predetermined pressure to generate compressed air. The compressor 1 supplies the compressed air to the combustor 2 mainly as combustion air.

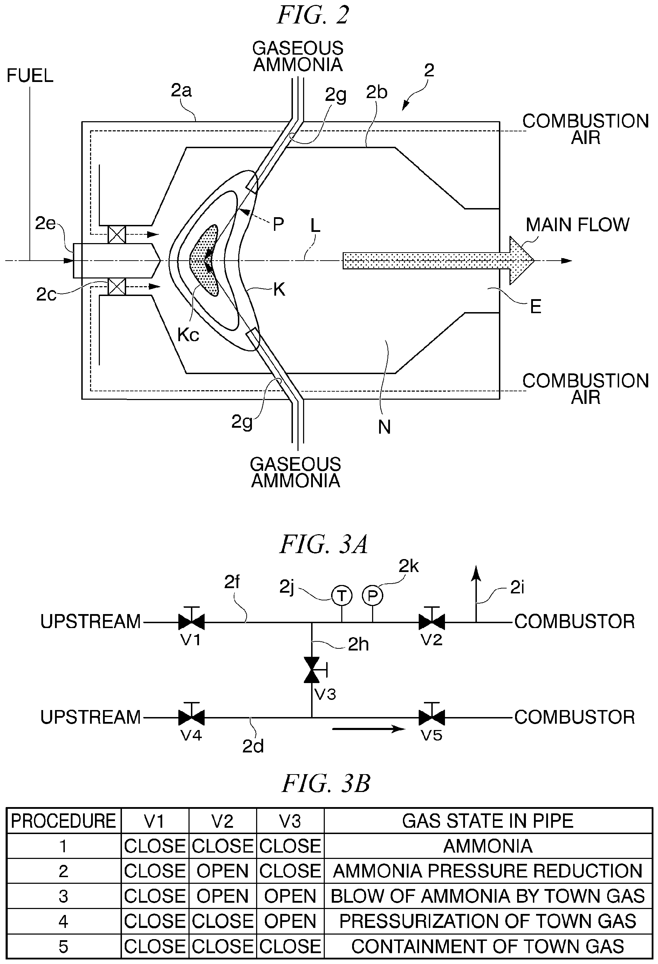

The combustor 2 burns a fuel using the compressed air as an oxidant to generate a combustion gas and supplies the combustion gas to the turbine 3. Further, gaseous ammonia (first gaseous fuel) is supplied to the combustor 2. As shown in FIGs. 2 and 3A, the combustor 2 includes a casing 2a, a liner 2b, a rectifier 2c, a fuel supply pipe 2d (a second supply pipe), a fuel nozzle 2e, an ammonia supply pipe 2f (first supply pipe), a plurality of ammonia injection nozzles 2g, a connection pipe 2h, a degassing pipe 2i, a temperature sensor 2j, and a pressure sensor 2k. The temperature sensor 2j and the pressure sensor 2k constitute a leak check measuring device. Further, as shown in FIG. 3A, the combustor 2 includes valves V1 to V5 controlled by the above-described control device. The valves V1 to V5 may be electrically connected to the control device. Moreover, in the present embodiment, the fuel (second gaseous fuel) uses a natural gas in a gaseous state. The natural gas has a liquefaction temperature which is lower than that of ammonia.

The casing 2a is a substantially cylindrical container which accommodates the liner 2b. The fuel nozzle 2e and the rectifier 2c are attached to one end of the casing 2a, and an exhaust port E is formed on the other end thereof. The liner 2b is a tubular body provided substantially coaxially with the casing 2a, and the internal space of the liner 2b is a combustion chamber N. Moreover, a direction of a central axis L of the liner 2b shown in FIG. 2 is a direction (main flow direction) of a main flow in the combustion chamber N. In addition, cooling air is supplied to the liner 2b along an inner peripheral surface of the liner 2b, and a cooling air layer is formed near the inner peripheral surface of the liner 2b.

The fuel supply pipe 2d is a pipe which connected to the fuel supply device 8 and the fuel nozzle 2e. The fuel supply pipe 2d guides the fuel supplied from the fuel supply device 8 to the fuel nozzle 2e. A first fuel valve V4 is provided on an inlet side of the fuel supply pipe 2d and a second fuel valve V5 is provided on an outlet side thereof.

The fuel nozzle 2e is provided on the center axis L of the liner 2b on one end of the casing 2a, and is a fuel injection nozzle which injects the fuel into the combustion chamber N. The rectifier 2c is provided in an annular shape on an outer periphery of the fuel nozzle 2e at one end of the casing 2a, supplies the combustion air in a direction from one end of the combustion chamber N toward the exhaust port E, and forms a swirling flow S around the center axis L of the liner 2b.

The ammonia supply pipe 2f is a pipe connected to the vaporizer 7 and the ammonia injection nozzle 2g. The ammonia supply pipe 2f guides the gaseous ammonia supplied from the vaporizer 7 to the ammonia injection nozzle 2g. Moreover, a first ammonia valve V1 (first on-off valve) is provided on an inlet side of the ammonia supply pipe 2f and a second ammonia valve V2 (second on-off valve) is provided on an outlet side thereof. Further, the first ammonia valve V1 may be provided near an inlet of the ammonia supply pipe 2f, and the second ammonia valve V2 may be provided near the inlet of the ammonia supply pipe 2f. However, the first ammonia valve V1 may be provided on the ammonia supply pipe 2f, and the second ammonia valve V2 may be provided closer to an outlet of the ammonia supply pipe 2f than the first ammonia valve V1. Further, the ammonia supply pipe 2f is connected to the degassing pipe 2i in a portion on a downstream side of the second ammonia valve V2.

A plurality of the ammonia injection nozzles 2g are nozzles which are inserted into the liner 2b from the casing 2a, and are provided at predetermined angles around the center axis L of the liner 2b, that is, around a flame K. The ammonia injection nozzle 2g has a cylindrical shape. A downstream end portion of the ammonia injection nozzle 2g is inserted from a peripheral surface of the liner 2b and is provided to be inclined radially inward in the liner 2b and to an upstream side in a flame forming direction. Moreover, the ammonia injection nozzle 2g is inserted into the liner 2b from an opening formed in the casing 2a and an opening formed in the peripheral surface of the liner 2b, and a rear end portion of the ammonia injection nozzle 2g is fixed to an outside of the casing 2a. The ammonia injection nozzle 2g is a nozzle which injects the gaseous ammonia toward the flame K from an inner surface of the liner 2b.

The connection pipe 2h is a pipe which is connected to a portion of the fuel supply pipe 2d between the first fuel valve V4 and the second fuel valve V5 and is connected to a portion of the ammonia supply pipe 2f between the first ammonia valve V1 and the second ammonia valve V2 of the ammonia supply pipe 2f. Accordingly, the connection pipe 2h connects the fuel supply pipe 2d and the ammonia supply pipe 2f to each other. The connection pipe 2h includes a connection pipe valve V3 (third on-off valve).

The degassing pipe 2i is a pipe in which a catalyst (not shown) is provided and is installed at a rear stage of the second ammonia valve V2 in the ammonia supply pipe 2f. The degassing pipe 2i decomposes the gaseous ammonia or a mixed gas of the gaseous ammonia and the fuel by a catalyst, and thereafter, discharges the decomposed gas into the atmosphere.

The temperature sensor 2j and the pressure sensor 2k are provided at a rear stage (a downstream position) of a connection point in the ammonia supply pipe 2f between the ammonia supply pipe 2f and the connection pipe 2h and are provided at an upstream position of the second ammonia valve V2. Further, the temperature sensor 2j and the pressure sensor 2k transmit measured data to the control device. The temperature sensor 2j and the pressure sensor 2k may be electrically connected to a control device.

Moreover, the fuel supply pipe 2d, the fuel nozzle 2e, the ammonia supply pipe 2f, the plurality of ammonia injection nozzles 2g, the connection pipe 2h, the degassing pipe 2i, the temperature sensor 2j, the pressure sensor 2k, the tank 5, the pump 6, the vaporizer 7, and the fuel supply device 8 constitute a fuel supply device in the present embodiment.

The flame K is a region having a relatively low oxygen concentration in the combustion chamber N. However, a central portion Kc of the flame K is a region having a lowest oxygen concentration in the flame K. As shown in FIG. 2, the plurality of ammonia injection nozzles 2g inject the gaseous ammonia toward the central portion Kc of the flame K in a main flow direction, that is, the region having the lowest oxygen concentration. Moreover, as shown in FIG. 2, the central portion Kc of the flame K is not a single point but an area having a predetermined spread.

The turbine 3 generates rotary power using the combustion gas as a driving gas. The turbine 3 is shaft-coupled to the compressor 1 and the generator G as shown in the drawings, and rotationally drives the compressor 1 and the generator G by the rotary power of the turbine 3. The turbine 3 exhausts the combustion gas from which the power is recovered toward the reduction catalyst chamber 4. The reduction catalyst chamber 4 is filled with a reduction catalyst and reduces nitrogen oxides (NOx) contained in the combustion gas to nitrogen (N2).

The tank 5 is a fuel tank which stores a predetermined amount of liquid ammonia and supplies the liquid ammonia to the pump 6. The pump 6 is a fuel pump which pressurizes the liquid ammonia supplied from the tank 5 to a predetermined pressure and supplies the liquid ammonia to the vaporizer 7.

The vaporizer 7 vaporizes the liquid ammonia supplied from the pump 6 to generate gaseous ammonia. The vaporizer 7 supplies the gaseous ammonia as a reducing agent immediately before the combustor 2 and the reduction catalyst chamber 4. In addition, the above-described reduction catalyst chamber 4 performs reduction processing on the nitrogen oxides (NOx) by cooperation between the reduction catalyst accommodated therein and the reducing agent.

Next, operations of the gas turbine A and the combustion device C will be described in detail.

In the gas turbine A and the combustion device C, the pump 6 is operated, and thus, the liquid ammonia is supplied from the tank 5 to the vaporizer 7. Accordingly, the liquid ammonia is vaporized by the vaporizer 7 to generate the gaseous ammonia. Moreover, the gaseous ammonia is supplied immediately before each ammonia injection nozzle 2g of the combustor 2 and the reduction catalyst chamber 4. The fuel is supplied from the fuel supply device 8 to the combustor 2 and is injected into the combustion chamber N from the fuel nozzle 2e.

The compressor 1 is operated, and thus, the compressed air is supplied to the rectifier 2c of the combustor 2 as the combustion air. The combustion air is injected by the combustor 2 in the direction of the center axis L of the liner 2b as the swirling flow S swirling around the center axis L of the liner 2b.

The combustion air is initially injected from the rectifier 2d of the combustor 2 toward the center axis L of the liner 2b. In this case, due to a centrifugal force caused by the swirling, the combustion air gradually spreads in a direction orthogonal to the central axis L, that is, gradually spreads toward the liner 2b (the inner peripheral surface of the liner 2b) located on a side of the central axis L. Further, by being connected to the flow of the combustion air, the fuel injected from the fuel nozzle 2e gradually spreads in a direction orthogonal to the central axis L similarly to the combustion air. Then, the fuel and the combustion air flowing in the combustion chamber N are mixed with each other, and a flame K is formed in the combustion chamber N.

Next, a method for checking a leak of ammonia in the combustor 2 will be described with reference to FIG. 3B.

During a leak check of the combustor 2, the first ammonia valve V1 and the second ammonia valve V2 are closed in the ammonia supply pipe 2f. Accordingly, in the ammonia supply pipe 2f, the gaseous ammonia remains in a portion between the first ammonia valve V1 and the second ammonia valve V2. That is, the control device controls the first ammonia valve V1, the second ammonia valve V2, and the connection pipe valve V3 so as to be in the closed state (procedure 1). In addition, when the second ammonia valve V2 is opened, the gaseous ammonia in the ammonia supply pipe 2f is discharged from the degassing pipe 2i, and thus, a pressure in the ammonia supply pipe 2f is reduced. That is, the control device controls the first ammonia valve V1 and the connection pipe valve V3 so as to be in the closed state, and controls the second ammonia valve V2 so as to be in the open state (procedure 2).

Next, the connection pipe valve V3 is opened in a state where the first fuel valve V4 of the fuel supply pipe 2d is opened and the second fuel valve V5 of the fuel supply pipe 2d is closed. That is, the control device controls the first ammonia valve V1 so as to be in the closed state and controls the second ammonia valve V2 and the connection pipe valve V3 so as to be in the open state (procedure 3). In this case, the control device controls the first fuel valve V4 and the connection pipe valve V3 such that the first fuel valve V4 is opened before the connection pipe valve V3 is opened. Accordingly, the fuel flows into the ammonia supply pipe 2f, the remaining ammonia in the ammonia supply pipe 2f is pushed out and discharged, and the gaseous ammonia in the ammonia supply pipe 2f is replaced with the fuel. In addition, in the above-described state, the second ammonia valve V2 is closed. That is, the control device controls the first ammonia valve V1 and the second ammonia valve V2 so as to be in the closed state and controls the connection pipe valve V3 so as to be in the open state (procedure 4). Accordingly, the fuel is further supplied into the ammonia supply pipe 2f, and the pressure in the ammonia supply pipe 2f increases.

Next, the connection pipe valve V3 is closed in a state where the first ammonia valve V1 and the second ammonia valve V2 are closed. That is, the control device controls the first ammonia valve V1, the second ammonia valve V2, and the connection pipe valve V3 so as to be in the closed state (procedure 5). Thereby, data of the pressure and temperature in the ammonia supply pipe 2f is obtained from the temperature sensor 2j and the pressure sensor 2k. Then, the leak check is performed by measuring a temperature change and a pressure drop from data obtained from the temperature sensor 2j and the pressure sensor 2k by the control device (not shown). After the leak check is completed, the second ammonia valve V2 is opened. Accordingly, the gaseous ammonia and the fuel in the ammonia supply pipe 2f are rapidly discharged from the degassing pipe 2i.

Moreover, other than during the leak check, for example, when mixed combustion of the ammonia and the fuel is completed, the fuel is introduced into the ammonia supply pipe 2f via the connection pipe 2h as in the leak check. Accordingly, when the operation of the combustor 2 is stopped, the gaseous ammonia hardly remains in the ammonia supply pipe 2f, and thus, the gaseous ammonia is not liquefied in the ammonia supply pipe 2f.

According to the present embodiment, by introducing fuel supplied at a pressure substantially equal to that of the gaseous ammonia to the ammonia supply pipe 2f during the leak check, the pressure in the ammonia supply pipe 2f is kept constant, and liquefaction of the gaseous ammonia remaining in the ammonia supply pipe 2f when the operation of the combustor 2 is stopped is prevented. Thereby, it is possible to prevent the temperature and the pressure in the ammonia supply pipe 2f from being changed. Therefore, it is not necessary to adjust the temperature in the ammonia supply pipe 2f, and a procedure of the leak check is simplified.

Further, according to the present embodiment, the gas discharged during the leak check is discharged to the outside through the degassing pipe 2i. Accordingly, the gas discharged during the leak check can be appropriately processed without passing through the liner 2b, and thereafter, is discharged to the outside. That is, the gas obtained by decomposing the gaseous ammonia or the mixed gas of the gaseous ammonia and the fuel by the catalyst can be discharged into the atmosphere by the degassing pipe 2i without passing through the liner 2b.

Moreover, according to the present embodiment, the pressure in the ammonia supply pipe 2f is reduced before the leak check. Accordingly, the fuel can be easily introduced into the ammonia supply pipe 2f, and the gaseous ammonia can be efficiently replaced with the fuel.

Moreover, the present disclosure is not limited to the embodiment, and for example, the following modification examples can be considered.
(1) In the embodiment, the leak check is performed in the combustion device C of the gas turbine A. However, the present disclosure is not limited to this, and the leak check may be performed in a combustion device such as a jet engine or a boiler.
(2) In the embodiment, the natural gas is used as the second fuel. However, the present disclosure is not limited to this, and for example, hydrogen or the like can be used. Moreover, similarly, the first fuel is not limited to the ammonia, and may be any gas having a liquefaction temperature higher than that of the second fuel.
(3) In the embodiment, the degassing pipe 2i is provided. However, the present disclosure is not limited to this. The gaseous ammonia or the mixed gas of the gaseous ammonia and the fuel discharged from the ammonia supply pipe 2f during the leak check may be discharged to the liner 2b.
(4) Moreover, in a case where the leak check is scheduled in advance, the fuel is introduced into the ammonia supply pipe 2f in advance when the operation of the combustor 2 is stopped, and the gaseous ammonia in the ammonia supply pipe 2f can be replaced with the fuel. Thereby, it is possible to simplify the procedure during the leak check.
(5) Further, the reduction catalyst chamber 4 may not be provided. [Industrial Applicability]

According to the present disclosure, by introducing the second gaseous fuel into the first supply pipe, it is possible to suppress the pressure change during the leak check and to simplify the leak check.

### [Reference Signs List]

- 1:: compressor
- 2:: combustor
- 2a:: casing
- 2b:: liner
- 2c:: rectifier
- 2d:: fuel supply pipe (second supply pipe)
- 2e:: fuel nozzle
- 2f:: ammonia supply pipe (first supply pipe)
- 2g:: ammonia injection nozzle
- 2h:: connection pipe
- 2i:: degassing pipe
- 2j:: temperature sensor
- 2k:: pressure sensor
- 3:: turbine
- 4:: reduction catalyst chamber
- 5:: tank
- 6:: pump
- 7:: vaporizer
- 8:: fuel supply device
- A:: gas turbine
- C:: combustion device
- E:: exhaust port
- G:: generator
- K:: flame
- Kc:: central portion
- V1:: first ammonia valve (first on-off valve)
- V2:: second ammonia valve (second on-off valve)
- V3:: connection pipe valve (third on-off valve)
- V4:: first fuel valve
- V5:: second fuel valve

## Claims

1. A fuel supply device comprising:
a first supply pipe through which a first gaseous fuel is supplied to a combustor;
a first on-off valve which is provided in the first supply pipe;
a second on-off valve which provided in a portion of the first supply pipe closer to an outlet of the first supply pipe than the first on-off valve;
a second supply pipe through which a second gaseous fuel having a liquefaction temperature lower than that of the first gaseous fuel is supplied to the combustor;
a connection pipe which connects a portion of the first supply pipe between the first on-off valve and the second on-off valve to the second supply pipe;
a third on-off valve which is provided in the connection pipe; and
a leak check measuring device which is provided in the first supply pipe,
wherein the second gaseous fuel is introduced into the first supply pipe to perform a leak check of the first supply pipe.

2. The fuel supply device according to claim 1, further comprising:
a control device,
wherein the control device controls the first on-off valve to be in a closed state and controls the second on-off valve and the third on-off valve to be in an open state, and thus replaces the first gaseous fuel remaining in the first supply pipe with the second gaseous fuel,
wherein after the replacement, the control device controls the first on-off valve and the second on-off valve to be in a closed state and controls the third on-off valve to be in an open state, and thus pressurizes an inside of the first supply pipe by the second gaseous fuel, and
wherein after the pressurization, the control device controls the first to third on-off valves to be in a closed state, and thus, performs the leak check of the first supply pipe using the leak check measuring device.

3. The fuel supply device according to claim 2,
wherein the control device controls the first on-off valve and the third on-off valve to be in the closed state and controls the second on-off valve to be in an open state before the replacement, and thus a pressure in the first supply pipe is reduced.

4. The fuel supply device according to claim 2 or 3, further comprising:
a degassing pipe of which one end is connected to a downstream side of the second on-off valve in the first supply pipe,
wherein the degassing pipe discharges the first gaseous fuel from the first supply pipe to an outside during the replacement or the pressure reduction.

5. The fuel supply device according to any one of claims 1 to 4,
wherein the second gaseous fuel is introduced from the second supply pipe to the first supply pipe when mixed combustion of the first gaseous fuel and the second gaseous fuel in the combustor ends.

6. The fuel supply device according to any one of claims 1 to 5,
wherein the first gaseous fuel is ammonia, and the second gaseous fuel is a natural gas.

7. A gas turbine comprising:
the fuel supply device according to any one of claims 1 to 6.
